(19) Europäisches Patentamt

European Patent Office

Office européen des brevets

(11) Veröffentlichungsnummer: **0 244 510**

**A2**

(12) # EUROPÄISCHE PATENTANMELDUNG

(21) Anmeldenummer: 86117558.6

(22) Anmeldetag: 17.12.86

(51) Int. Cl.⁴: **G01K 7/04**

(30) Priorität: 07.04.86 DE 3611614

(43) Veröffentlichungstag der Anmeldung:
11.11.87 Patentblatt 87/46

(84) Benannte Vertragsstaaten:
**DE FR GB IT**

(71) Anmelder: **VDO Adolf Schindling AG
Gräfstrasse 103
D-6000 Frankfurt/Main(DE)**

(72) Erfinder: **Nickol, Friedrich Wilhelm
Heinrich-Heine-Strasse 18
D-5244 Daaden(DE)**
Erfinder: **Blessing, Rolf, Dr.
Pfarrgasse 9
D-6384 Schmitten(DE)**

(74) Vertreter: **Klein, Thomas, Dipl.-Ing. (FH)
Sodener Strasse 9 Postfach 6140
D-6231 Schwalbach a. Ts.(DE)**

(54) **Anordnung mit einem thermischen Sensor.**

(57) Bei einer Anordnung mit einem thermischen Sensor sind auf einem Substrat Leiterbahnen aufgebracht, welche sowohl Teile des Sensors als auch Teile einer Flüssigkristallzelle und elektrische Verbindungen bilden. Die Leiterbahnen sind teilweise mit einer Metallschicht überzogen. Die Leiterbahnen bestehen vorzugsweise aus Indiumzinnoxid und die Metallschicht aus Kupfer.

Fig.1

## Anordnung mit einem thermischen Sensor

Die Erfindung betrifft eine Anordnung mit einem thermischen Sensor. Bei bekannten Anordnungen mit thermischen Sensoren, welche zur Messung von Temperaturen, Strömungsgeschwindigkeiten und anderen über eine Temperaturmessung zu messenden Größen dienen, werden die Sensoren, die elektrischen Schaltungen und Anzeigeelemente, wie beispielsweise Flüssigkristallzellen, nach jeweils verschiedenen Verfahren hergestellt und anschließend zusammengebaut. Dadurch sind insgesamt viele Herstellungsschritte erforderlich, was einer besonders preiswerten Herstellung entgegensteht.

Aufgabe der vorliegenden Erfindung ist es, eine Anordnung mit einem thermischen Sensor anzugeben, die in möglichst einfacher Weise herstellbar ist.

Die erfindungsgemäße Anordnung ist dadurch gekennzeichnet, daß auf einem Substrat Leiterbahnen aufgebracht sind, welche sowohl Teile des Sensors als auch Teile einer Flüssigkristallzelle und elektrische Verbindungen bilden, und daß die Leiterbahnen teilweise mit einer Metallschicht überzogen sind.

Damit können alle wesentlichen Teile des Sensors und der Flüssigkristallzelle sowie die Leiterbahnen mit einem Fertigungsverfahren gemeinsam hergestellt werden.

Die Anwendung von zur Herstellung von Flüssigkristallzellen bekannten und erprobten Verfahren wird gemäß einer Weiterbildung der Erfindung dadurch ermöglicht, daß die Leiterbahnen aus Indiumzinnoxid bestehen. Dabei ist es vorteilhaft, wenn die Metallschicht aus Kupfer besteht. Es sind jedoch auch andere Metalle geeignet. Ein geeignetes Schichtsystem ist durch DE-C1 30 28 044 bekannt geworden.

Eine andere Weiterbildung der Erfindung besteht darin, daß mindestens ein Indiumzinnoxid-Kupfer-Übergang als Thermoelement ausgebildet ist.

Zur Auswertung der vom Thermoelement abgegebenen Spannung ist gemäß einer anderen Weiterbildung der Erfindung vorgesehen, daß ferner eine elektrische Schaltung, vorzugsweise in monolitischer Form, auf dem Substrat angeordnet ist.

Die erfindungsgemäße Anordnung kann dadurch als Thermometer ausgebildet sein, daß die elektrische Schaltung einen Verstärker für die vom Thermoelement abgegebene Spannung, einen Analog/Digital-Wandler und eine Ansteuerschaltung für die Flüssigkristallzelle umfaßt.

Eine andere erfindungsgemäße Ausgestaltung dient zur Messung von Strömungsgeschwindigkeiten und ist dadurch gekennzeichnet, daß auf einem Teil des Substrats, welcher zusammen mit einem Gehäuse einen Strömungskanal bildet, ein aus der Metallschicht gebildetes Heizelement und in Strömungsrichtung gesehen jeweils vor und hinter dem Heizelement ein Thermoelement angeordnet ist und daß die elektrische Schaltung einen Differenzverstärker zur Bildung der Differenz der Thermospannungen enthält und der Strömungsgeschwindigkeit entsprechende Signale an die Flüssigkristallzelle abgibt.

Eine Weiterbildung dieser Ausgestaltung besteht darin, daß der Strömungskanal zusammen mit einer rahmenartigen Abdeckung der Flüssigkristallzelle ein Gehäuseteil bildet. Dieses führt zu einem äußerst kompakten preiswert herzustellenden Meßgerät für Strömungsgeschwindigkeiten, welches beispielsweise zur Messung von Luftströmungen im Zusammenhang mit Heizungsanlagen verwendet werden kann. Ist der Strömungskanal mit geeigneten Anschlüssen versehen, kann damit auch die Strömungsgeschwindigkeit von Flüssigkeiten gemessen werden. Schließlich kann ein geeignetes Signal aus der Anordnung herausgeführt und einem Stellglied oder einer Warneinrichtung zugeleitet werden. Ein derartiges Gerät kann beispielsweise zur Überwachung der Wirkung einer Umwälzpumpe eines Aquariums und gegebenenfalls der Wassertemperatur verwendet werden.

Eine andere Weiterbildung der Erfindung besteht darin, daß die Indiumzinnoxid-Bahnen ferner Berührungssensoren bilden, welche für die Bedienung der Anordnung vorgesehen sind. Dadurch ist die Herstellung von Bedienelementen für die Anordnung, beispielsweise zum Ein-bzw. Ausschalten oder zur Wahl des Meßbereichs ohne weitere Bauteile, wie Tasten, Kontaktfedern usw., möglich.

Gemäß einer anderen Weiterbildung wird die Metallschicht vor Korrosion dadurch geschützt, daß auf die Metallschicht eine weitere Schicht aus Indiumzinnoxid aufgebracht ist.

Schließlich besteht eine Weiterbildung der Erfindung darin, daß eine Umschalteinrichtung vorgesehen ist, mit welcher das Heizelement abgeschaltet und die Anzeige von einer Strömungsgeschwindigkeitsanzeige auf eine Temperaturanzeige umgeschaltet werden kann.

Die Erfindung läßt zahlreiche Ausführungsformen zu. Drei davon sind schematisch in der Zeichnung an Hand mehrerer Figuren dargestellt und nachfolgend beschrieben. Es zeigt:

Fig. 1 einen Schnitt durch ein erstes Ausführungsbeispiel,

Fig. 2 eine Ansicht des ersten Ausführungsbeispiels mit abgenommenen Gehäuseoberteil und

Fig. 3 einen Schnitt durch ein zweites Ausführungsbeispiel.

Gleiche Teile sind in den Figuren mit gleichen Bezugzeichen versehen.

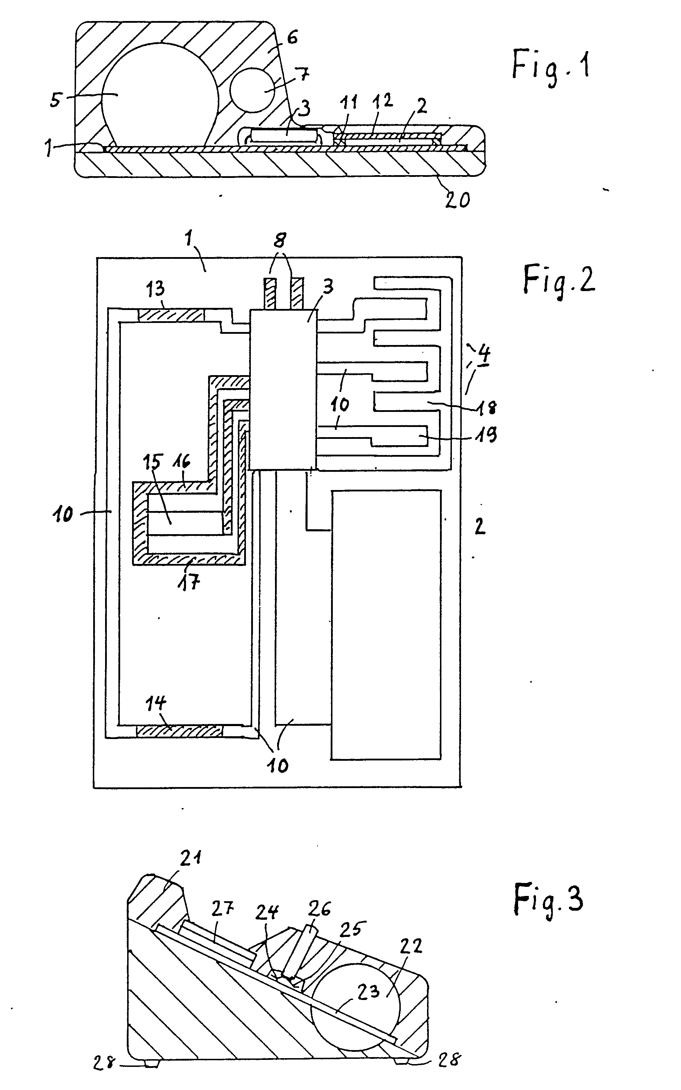

Die in den Figuren 1 und 2 dargestellte Anordnung dient zur Messung der Strömungsgeschwindigkeit von flüssigen und gasförmigen Medien. Auf einem Substrat 1, welches beispielsweise aus Glas besteht, sind eine Flüssigkristallzelle 2, eine integrierte Schaltung 3, Berührungstasten 4 sowie ein Sensor zur Messung der Strömungsgeschwindigkeit aufgebracht. Ein Gehäuseoberteil 6 bildet unter anderem einen Strömungskanal 5, welcher sich in Längsrichtung über den Bereich des Substrats 1 erstreckt, welcher den Sensor bildet. Im Gehäuseoberteil 6 ist ferner eine Batterie 7 vorgesehen, welche über Anschlüsse 8 mit der auf dem Substrat 1 aufgebrachten Schaltung 3 in Verbindung steht.

Weitere die Batterie 7 betreffende Einzelheiten, wie beispielsweise Kontaktfedern und eine Öffnung im Gehäuse 6 beim Auswechseln der Batterie sind im einzelnen nicht dargestellt, da diese zum Verständnis der Erfindung nicht erforderlich sind. Anstelle der Batterie 7 kann auch eine Solarzelle verwendet werden, welche direkt auf Leiterbahnen des Substrats 1 aufgelötet ist und für welche ein entsprechender lichtdurchlässiger Ausschnitt im Gehäuse 6 vorgesehen ist.

Die Leiterbahnen 10 auf dem Substrat 1 bestehen aus Indiumzinnoxid. Sie können daher mit den gleichen Verfahrensschritten wie Elektroden der Flüssigkristallzelle aufgetragen werden. Nachdem auf dem Substrat 1 die Elektroden der Flussigkristallzelle 2 aufgebracht worden sind, kann in an sich bekannter Weise die Flüssigkristallzelle 2 durch Abstandshalter 11 und eine obere Platte 12 ergänzt werden. Die Verbindungsleitungen zwischen der Schaltung 3 und der Flüssigkristallzelle 2 sind vereinfacht dargestellt. In an sich bekannter Weise ist die Schaltung 3 mit der Flüssigkristallzelle 2 über eine Vielzahl von Leitungen verbunden.

Die Schicht aus Indiumzinnoxid wird an mehreren, in Fig. 2 schraffierten Stellen durch eine Kupferschicht ergänzt. Es sind dieses die Stellen, auf welche Bauelemente, beispielsweise die integrierte Schaltung 3, aufgelötet werden oder welche mit Leitungen kontaktiert werden sollen, wie die Anschlußpunkte 8. Außerdem bilden Kupfer-Zinnoxid-Übergänge bei 13, 14 Thermoelemente. Eine Leiterbahn 15 aus Indiumzinnoxid dient als Heizelement und wird daher von einem relativ großen Strom durchflossen. Wegen des symmetrischen Aufbaus sind zwei Rückleiter 16, 17 vorgesehen, welche mit einer Kupferschicht versehen sind. Weitere Leiterbahnen 10 bilden Berührungstasten, welche zum Ein-bzw. Ausschalten der Anordnung und für andere Zwecke, beispielsweise zur Meßbereichsumschaltung, dienen. Dabei bilden die Leiterbahnen 10 jeweils zwei Elektroden 18, 19. Durch Berührung bzw. Annäherung mit dem Finger ändert sich der Widerstand bzw. die Kapazität zwischen den Elektroden 18, 19, was in der integrierten Schaltung 3 ausgewertet wird.

Die integrierte Schaltung 3 enthält in an sich bekannter Weise eine Schaltung zur Regelung des Stroms durch das Heizelement 15, Verstärkerschaltungen für die von den Thermoelementen 13 und 14 abgegebenen Thermospannungen, einen Analog/Digital-Wandler sowie eine Ansteuerschaltung für die Flüssigkristallzelle 2. Außerdem enthält die integrierte Schaltung 3 Schaltungen zur Auswertung der Berührungssensoren 4. Gegebenenfalls kann die Schaltung 3 auch zur wahlweisen Messung der Stromgeschwindigkeit oder der Temperatur ausgelegt sein. Dabei kann zur Messung der Temperatur der Strom durch das Heizelement 15 abgeschaltet werden und die Thermospannung eines oder beider Thermoelemente ausgewertet werden. Zur Umschaltung kann ein weiterer Berührungssensor 4 vorgesehen sein.

Das Heizelement 15 gibt Wärme an das im Strömungskanal 5 befindliche Medium ab, wodurch die Thermoelemente 13, 14 ebenfalls erwärmt werden. Bei stillstehendem Medium werden die Thermoelemente 13, 14 gleich stark erwärmt, so daß ihre Thermospannung ebenfalls gleich ist, was die Anzeige einer Strömungsgeschwindigkeit von 0 zur Folge hat. Strömt jedoch das im Strömungskanal 5 befindliche Medium in eine Richtung, so wird dasjenige Thermoelement, welches in Strömungsrichtung gesehen hinter dem Heizelement liegt, stärker erwärmt. Die Temperaturdifferenz der Thermoelemente 13, 14 wird als Thermospannung in der integrierten Schaltung 3 gemessen und in Steuersignale für die Flüssigkristallzelle 2 umgewandelt. Je höher die Strömungsgeschwindigkeit ist, desto größer ist die Differenz der Thermospannungen.

Das obere Gehäuseteil 6 wird ergänzt durch ein plattenförmiges unteres Gehäuseteil 20, das mit dem oberen Gehäuseteil 6 in geeigneter Weise verbunden ist. Zur Verbindung des Strömungskanals 5 mit Leitungen können am Gehäuseoberteil 6 entsprechende nicht dargestellte Anschlüsse vorgesehen sein, die der Übersichtlichkeit halber jedoch nicht dargestellt sind.

In ähnlicher Weise können andere Meßanordnungen aufgebaut sein, beispielsweise zur Temperaturmessung oder zur Messung des pH-Wertes. Bei dem in Fig. 3 dargestellten zweiten Ausführungsbeispiel ist das Gehäuse 21 abweichend vom ersten Ausführungsbeispiel gestaltet. Der Strömungskanal 22 umfaßt beide Seiten des als Sensors ausgebildeten Bereichs des Substrats 23, Kontakte 24 sind bei dem Ausführungsbeispiel nach Fig. 3 nicht als Beruhrungskontakte vorgesehen, sondern bestehen neben den Leiterbahnen aus einem federnden Kontaktstück 25, welches mit einer Taste auf die Leiterbahnen gedrückt werden kann. Für die Flüssigkristallzelle 27 ist ein Ausschnitt in dem Gehäuse 21 vorgesehen. Ferner hat das Gehäuse Fuße 28.

**Ansprüche**

1. Anordnung mit einem thermischen Sensor, dadurch gekennzeichnet, daß auf einem Substrat (1) Leiterbahnen aufgebracht sind, welche sowohl Teile des Sensors (13 bis 17) als auch Teile einer Flüssigkristallzelle (2) und elektrische Verbindungen (10) bilden, und daß die Leiterbahnen teilweise mit einer Metallschicht überzogen sind.

2. Anordnung nach Anspruch 1, dadurch gekennzeichnet, daß die Leiterbahnen aus Indiumzinnoxid bestehen.

3. Anordnung nach Anspruch 2, dadurch gekennzeichnet, daß die Metallschicht aus Kupfer besteht.

4. Anordnung nach einem der vorhergehenden Ansprüche, dadurch gekennzeichnet, daß mindestens ein Indiumzinnoxid-Kupfer-Übergang als Thermoelement (13, 14) ausgebildet ist.

5. Anordnung nach einem der vorhergehenden Ansprüche, dadurch gekennzeichnet, daß ferner eine elektrische Schaltung (3), vorzugsweise in monolitischer Form, vorgesehen ist.

6. Anordnung nach Anspruch 4 und 5, dadurch gekennzeichnet, daß die elektrische Schaltung (3) einen Verstärker für die vom Thermoelement (13, 14) abgegebene Spannung, einen Analog/Digital-Wandler und eine Ansteuerschaltung für die Flüssigkristallzelle (2) umfaßt.

7. Anordnung nach Anspruch 4 und 5, dadurch gekennzeichnet, daß auf einem Teil des Substrats (1), welcher zusammen mit einem Gehäuse (6) einen Strömungskanal (5) bildet, ein aus der Metallschicht gebildetes Heizelement (15) und in Strömungsrichtung gesehen jeweils vor und hinter dem Heizelement ein Thermoelement (13, 14) angeordnet ist und daß die elektrische Schaltung (3) einen Differenzverstärker zur Bildung der Differenz der Thermospannungen enthält und der Strömungsgeschwindigkeit entsprechende Signale an die Flüssigkristallzelle (2) abgibt.

8. Anordnung nach einem der vorhergehenden Ansprüche, dadurch gekennzeichnet, daß der Strömungskanal (5) zusammen mit einer rahmenartigen Abdeckung der Flüssigkristallzelle (2) ein Gehäuseteil (6) bildet.

9. Anordnung nach einem der vorhergehenden Ansprüche, dadurch gekennzeichnet, daß die Indiumzinnoxid-Bahnen ferner Berührungssensoren (4) bilden, welche für die Bedienung der Anordnung vorgesehen sind.

10. Anordnung nach einem der vorhergehenden Ansprüche, dadurch gekennzeichnet, daß auf die Metallschicht eine weitere Schicht aus Indiumzinnoxid aufgebracht ist.

11. Anordnung nach einem der vorhergehenden Ansprüche, dadurch gekennzeichnet, daß eine Umschalteinrichtung vorgesehen ist, mit welcher das Heizelement abgeschaltet und die Anzeige von einer Strömungsgeschwindigkeitsanzeige auf eine Temperaturanzeige umgeschaltet werden kann.

Fig. 1

Fig. 2

Fig. 3